# EUROPÄISCHE PATENTSCHRIFT

(11) **EP 0 790 616 B1**
(45) Veröffentlichungstag und Bekanntmachung des Hinweises auf die Patenterteilung: **03.11.1999**
(21) Anmeldenummer: 97200342.0
(22) Anmeldetag: 07.02.1997
(51) Int. Cl.: G11B 33/04

(54) **Gehäuse zur Aufnahme von plattenförmigen Informationsträgern**
Box for disclike recording media
Boîte pour supports d'information en forme de disque

(30) Priorität: 14.02.1996 DE 19605336
(43) Veröffentlichungstag der Anmeldung: 20.08.1997
(73) Patentinhaber: Philips Patentverwaltung GmbH, 22335 Hamburg (DE); Koninklijke Philips Electronics N.V., 5621 BA Eindhoven (NL)
(72) Erfinder: Grobecker, Hermann, Röntgenstra e 24, 22335 Hamburg (DE); Wilhelm, Henning, Röntgenstra e 24, 22335 Hamburg (DE)
(74) Vertreter: von Laue, Hanns-Ulrich, Dipl.-Ing.

(56) Entgegenhaltungen:
- EP-A- 0 114 631
- WO-A-92/22066
- US-A- 4 778 047

## Beschreibung

Die Erfindung bezieht sich auf ein Gehäuse zur Aufnahme von plattenförmigen Informationsträgern, z.B. CD's, mit einem eine Tragplatte aufweisenden Zwischenteil und mit zwei an dem Zwischenteil angelenkten gleichartigen Deckelteilen, wobei die Deckelteile innenseitig und das Zwischenteil beidseitig jeweils eine Halteanordnung für die Informationsträger aufweisen können.

Ein derartiges Gehäuse ist z.B. durch die EP-PS 0 114 631 bekannt geworden. Bei diesem bekannten Gehäuse handelt es sich um eine weltweit standardisierte CD-Verpackung zur Aufnahme von mehreren CD's. Maximal können in einer solchen bekannten Verpackung vier CD's untergebracht werden. In diesem Fall besitzen die Deckelteile innenseitig je eine Halteanordnung zur Aufnahme je einer CD, ferner besitzt das Zwischenteil beidseitig je eine Halteanordnung zur Aufnahme von weiteren zwei CD's. Bei den in der Praxis ausgeführten handelsüblichen Gehäusen befinden sich dabei die Halteanordnungen des Zwischenteiles zentrisch auf einer Halteplatte, die einerseits beidseitig mit einer erhöhten Mittenauflage versehen ist und andererseits radial außerhalb der Mittenauflage gewölbt und mit vorstehenden Versteifungsrippen ausgebildet ist, so daß diese Tragplatte rechtwinklig zur Ebene relativ viel Raum beansprucht. Dabei ist der Abstand zwischen den Stirnseiten der Halteanordnungen beiderseits der Tragplatte so gering, daß höchstens jeweils ein dünnes Textblatt zwischen den Halteanordnungen Platz hätte. Ein derartiges Gehäuse enthält jedoch in der Regel vier CD's, denen ein entsprechend dickes Textheft beigefügt wird. Bisher kann ein solches Textheft aus oben genannten Gründen jedoch nicht innerhalb des Gehäuses untergebracht werden, vielmehr wird dieses relativ dicke Textheft zusammen mit dem Gehäuse in einem besonderen Schuber, z.B. aus Pappe, angeboten.

Der Erfindung liegt die Aufgabe zugrunde, das bekannte handelsübliche Gehäuse der eingangs genannten Art derart zu gestalten, daß bei unveränderten Außenabmessungen des Gehäuses der nutzbare Innenraum vergrößert wird und besser ausgenutzt werden kann.

Diese Aufgabe wird gemäß der Erfindung dadurch gelöst, daß die Tragplatte auf beiden Seiten eben ausgebildet und zur Bildung von zwei unterschiedlich großen Räumen asymmetrisch zwischen den Deckelteilen angeordnet ist. Durch die beidseitige ebene Ausbildung der Tragplatte ergibt sich im Vergleich zu dem in der Praxis ausgeführten handelsüblichen Gehäuse zusätzlich ein Raumgewinn beiderseits der Tragplatte, so daß schon allein dadurch nicht nur ein sehr dünnes Einzelblatt, wie bei der bekannten Ausführung, sondern jeweils auf beiden Seiten ein dünnes Textheft zwischen den einander gegenüberstehenden Halteanordnungen untergebracht werden könnte. Dadurch jedoch, daß die Tragplatte zusätzlich asymmetrisch angeordnet ist, entstehen zwei unterschiedlich große Räume beiderseits der Tragplatte, die verschiedene Anwendungen bzw. Verwendungen ermöglichen und die, je nach Lage der Tragplatte, unterschiedliche Größen annehmen können. Durch diese Bauweise ist es somit möglich, den durch die Abmagerung der Tragplatte, d.h. durch die ebene Ausbildung gewonnenen zusätzlichen Raum, gezielt auf der einen oder anderen Seite der Tragplatte anzuordnen. Die asymmetrische Anordnung der Tragplatte ist dadurch möglich geworden, daß die Tragplatte im Unterschied zu der handelsüblichen Bauweise nunmehr beidseitig eben ausgebildet ist, wodurch der erwähnte zusätzliche Raumgewinn ermöglicht wurde.

Eine bevorzugte Ausgestaltung der Erfindung ist gekennzeichnet durch eine solche Lage der Tragplatte, daß bei Bestückung des kleineren Raumes mit beiden Halteanordnungen die Enden der Halteanordnungen mit geringem Abstand unmittelbar einander gegenüberstehen. Bei dieser Bauweise ist die Tragplatte somit in Richtung des kleinen Raumes so weit verschoben, daß in dem kleinen Raum die gleichen Verhältnisse herrschen wie jeweils in den Räumen bei der bekannten herkömmlichen Bauweise. Der geringe Abstand zwischen den beiden Halteanordnungen in dem kleineren Raum ermöglicht somit, wie bei dem bekannten herkömmlichen Gehäuses, nur die Unterbringung eines dünnen Einzelblattes, nicht jedoch eines dickeren Textheftes. Ein solches dickeres Textheft könnte in dem kleineren Raum bei dieser Bauweise nur dann untergebracht werden, wenn ein oder beide Halteanordnungen entfernt würden. Dagegen kann in dem größeren Raum auf der anderen Seite der Tragplatte, wegen der asymmetrischen Lage der Tragplatte, ein dickeres Textheft auch dann untergebracht werden, wenn in diesem Raum beide Halteanordnungen vorhanden sind. Überdies könnte in dem größeren Raum ein noch dickeres Textheft untergebracht werden, wenn eine oder beide Halteanordnungen entfernt würden. Der Raumgewinn des größeren Raumes beruht also einmal auf der ebenen Ausbildung der Tragplatte und zum anderen auf ihrer asymmetrischen Anordnung in dem Gehäuse. Eine derartige Lage der Tragplatte ermöglicht somit eine vielfältige Verwendung des Gehäuses mit einer unterschiedlichen Anzahl von Informationsträgern und einer unterschiedlichen Unterbringung verschieden dicker Texthefte. Nachfolgend werden vier verschiedene Ausgestaltungen eines solchen Gehäuses beschrieben.

So wird in einer ersten Ausgestaltung vorgeschlagen, daß beide Deckelteile ein mit einer Halteanordnung versehenes Tray enthalten und daß beide Seiten der Tragplatte eine Halteanordnung aufweisen. Diese Bauweise ermöglicht die Unterbringung von vier plattenförmigen Informationsträgern und eines Textheftes in dem größeren Raum zwischen den beiden dort gehaltenen Informationsträgern.

Eine zweite Ausgestaltung besteht darin, daß beide Deckelteile ein mit einer Halteanordnung versehenes Tray enthalten und daß die Tragplatte nur auf der Seite in dem kleineren Raum mit einer Halteanordnung versehen ist. Diese Bauweise ermöglicht die Unterbringung von drei plattenförmigen Informationsträgern und eines Textheftes, das im Vergleich zur letztgenannten Ausführung dicker sein kann.

Eine dritte Ausgestaltung besteht darin, daß nur die beiden Deckelteile jeweils ein mit einer Halteanordnung versehenes Tray enthalten. Bei dieser Bauweise ist die Unterbringung von zwei plattenförmigen Informationsträgern möglich und ferner die Unterbringung von zwei Textheften, die jeweils eine unterschiedliche Dicke besitzen.

In einer vierten Ausgestaltung ist schließlich vorgesehen, daß nur das Deckelteil des kleineren Raumes ein eine Halteanordnung aufweisendes Tray enthält und daß nur die diesem Deckelteil gegenüberliegende Seite der Tragplatte eine weitere Halteanordnung aufweist. Diese Bauweise ermöglicht, wie die letztgenannte Bauweise, die Aufnahme von zwei plattenförmigen Informationsträgern und mindestens eines Textheftes, das dicker sein kann als alle bisher verwendeten Texthefte, da nunmehr der größere Raum frei von Halteanordnungen ist.

Bei dem letztgenannten Ausführungsbeispiel ist kein in das Deckelteil des größeren Raumes einsetzbares Tray vorhanden, so daß kein Informationsblatt untergebracht werden kann, das normalerweise zwischen dem eingeclipsten Tray und dem Deckelteil liegt. Im Hinblick darauf wird in einer weiteren Ausgestaltung der Erfindung vorgeschlagen, daß das den größeren Raum begrenzende Deckelteil einen mit einer Grifflasche versehenen Einsatz enthält, der den Außenabmessungen eines Trays enschließlich seiner Grifflasche angepaßt ist und der im Deckelbereich eine beidseitig ebene, dünne Platte aufweist. Damit ist es möglich, anstelle des Trays diesen Einsatz in dem Deckelteil unterzubringen, der z.B. genau wie das Tray mit seitlichen Klemmelementen in das Deckelteil eingeclipst werden kann. Ferner kann somit auch ein einfaches Informationsblatt zwischen dem Einsatz und dem Deckelteil untergebracht werden, wie dies bei einem normalen Tray auch der Fall ist. Da die dünne Platte des Einsatzes kaum Platz einnimmt und auch keine Halteanordnung besitzt, ist der verfügbare Raum für das Textheft praktisch nicht eingeschränkt.

In einer weiteren Ausgestaltung der Erfindung ist vorgesehen, daß in das den größeren Raum begrenzende Deckelteil ein der Grifflasche des Trays angepaßtes Adapterteil eingeklemmt ist. Bei diesem Ausführungsbeispiel entfällt ein im Deckelteil einclipbares Einsatzteil mit Platte, so daß ein in dem größeren Raum untergebrachtes Textheft direkt von außen einsehbar ist.

Die Zeichnung zeigt in Fig. 1 ein Ausführungsbeispiel gemäß dem Stand der Technik und in Fig. 2 bis 7 verschiedene Ausführungsbeispiele des Gegenstandes gemäß der Erfindung.
Fig. 1 zeigt in perspektivischer Darstellung ein Gehäuse zur Aufnahme von mehreren CD's mit einem Mittelteil und zwei gleichartigen Deckelteilen,
Fig. 2 zeigt einen Schnitt durch ein erfindungsgemäßes Gehäuse in einer ersten Ausgestaltung, wobei nur der rechte Teil geschnitten dargestellt ist,
Fig. 3 bis 5 zeigen Teilschnitte vom Mittelbereich für drei weitere Ausgestaltungen des Gehäuses,
Fig. 6 zeigt ein Einsatzteil, und
Fig. 7 zeigt einen Adapter zum Einsatz in ein Deckelteil.

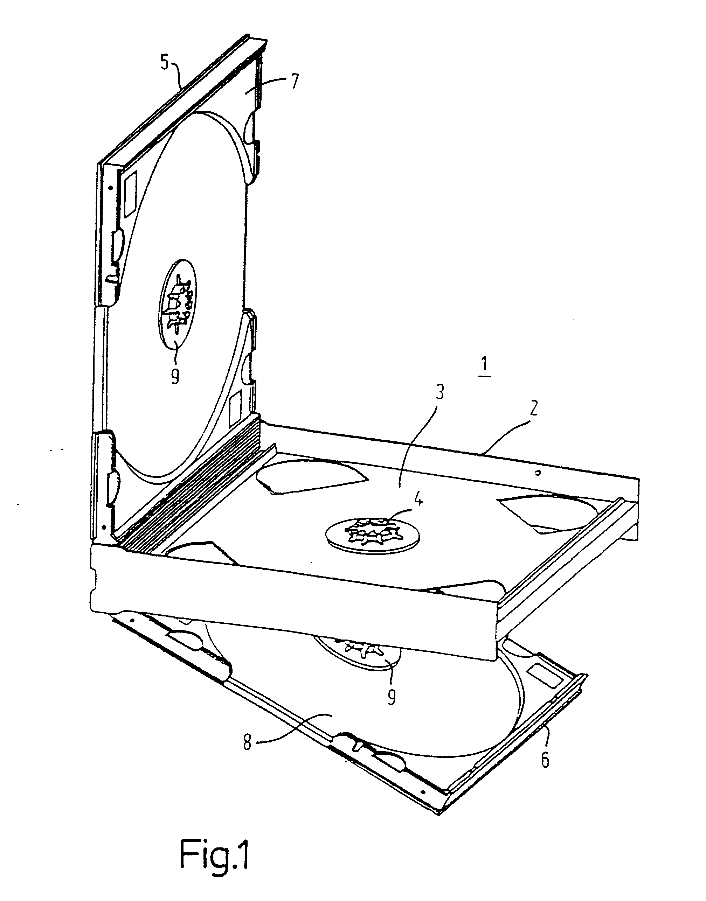

Das bekannte Gehäuse 1 gemäß Fig. 1 besitzt ein Mittelteil 2 mit einer Tragplatte 3, die beidseitig mit je einer Halteanordnung 4 für plattenförmige Informationsträger versehen ist. An beiden Seiten ist das Mittelteil 2 mit angelenkten, gleichartig ausgebildeten Deckelteilen 5, 6 versehen, in die Trays 7, 8 eingeklemmt sind, die ihrerseits ebenfalls Halteanordnungen 9 tragen.

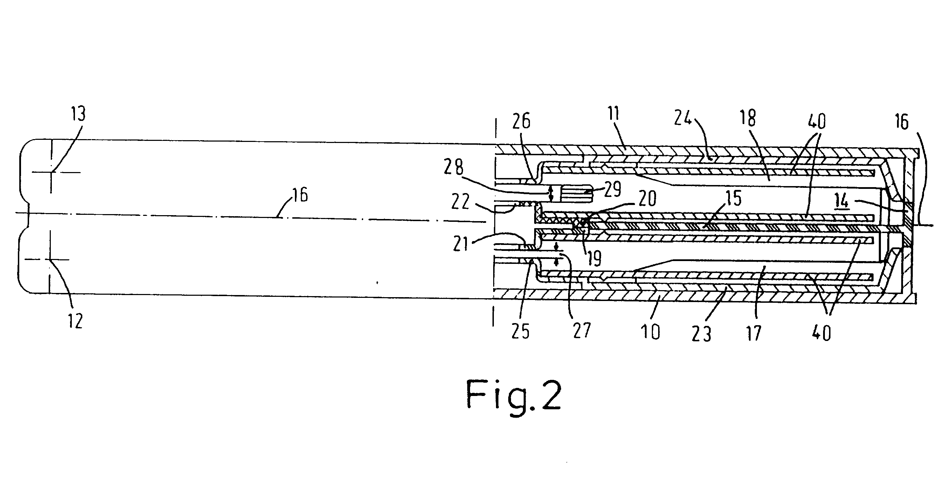

Die in den Ausführungsbeispielen gemäß Fig. 2 bis 5 dargestellten Bauweisen unterscheiden sich von der bekannten Bauart gemäß Fig. 1 dadurch, daß das Mittelteil verändert wurde, wogegen die Außenabmessungen und die Deckelteile nicht verändert wurden.

Das Ausführungsbeispiel gemäß Fig. 2 besitzt zwei gleichartig ausgebildete Deckelteile 10, 11, die bei 12, 13 an einem Mittelteil 14 angelenkt sind. Das Mittelteil 14 besitzt eine auf beiden Seiten eben ausgeführte Tragplatte 15, die gegenüber der Symmetrieebene 16 des Gehäuses nach unten versetzt ist. Durch diese asymmetrische Lage der Tragplatte 15 entsteht ein kleinerer Raum 17, der durch das Deckelteil 10, und ein größerer Raum 18, der durch das Deckelteil 11 begrenzt wird. Die Tragplatte 15 besitzt in diesem Ausführungsbeispiel beidseitig angeordnete erhöhte Mittenauflagen 19, 20, die jeweils mit einer Halteanordnung 21, 22 versehen sind.

In die beiden Deckelteile 10, 11 ist jeweils ein Tray 23, 24 eingeklemmt, welches jeweils mit einer Klemmanordnung 25, 26 versehen ist. Bei dieser Bauweise wird zwischen den Halteanordnungen 21 und 25 im kleineren Raum 17 ein Abstand 27 gebildet, der höchstens zur Einlage eines dünnen Blattes geeignet ist. Dagegen wird zwischen den Halteanordnungen 22 und 26 des größeren Raums 18 ein relativ großer Abstand 28 gebildet, der nunmehr zur Aufnahme eines dickeren Textheftes 29 geeignet ist.

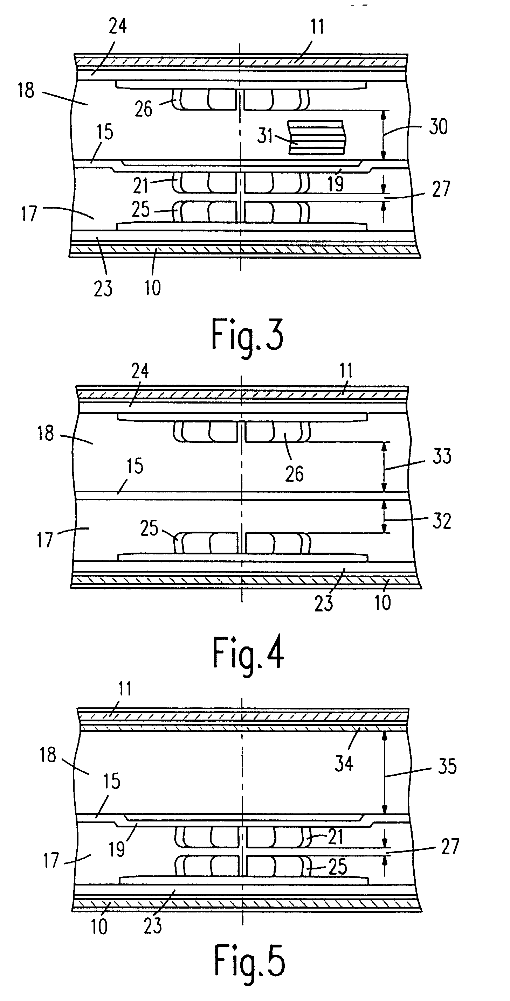

Das in Fig. 3 dargestellte Ausführungsbeispiel unterscheidet sich von dem in Fig. 2 gezeigten Beispiel dadurch, daß im größeren Raum 18 die Tragplatte 15 keine Halteanordnung besitzt, so daß hier ein Freiraum 30 entsteht, der zur Aufnahme eines noch dickeren Textheftes 31 geeignet ist.

Bei dem Ausführungsbeispiel nach Fig. 4 besitzt die Tragplatte 15 überhaupt keine Halteanordnungen, so daß im kleineren Raum 17 ein Freiraum 32 und im größeren Raum 18 ein Freiraum 33 entsteht, die jeweils zur Aufnahme unterschiedlich dicker Texthefte geeignet sind.

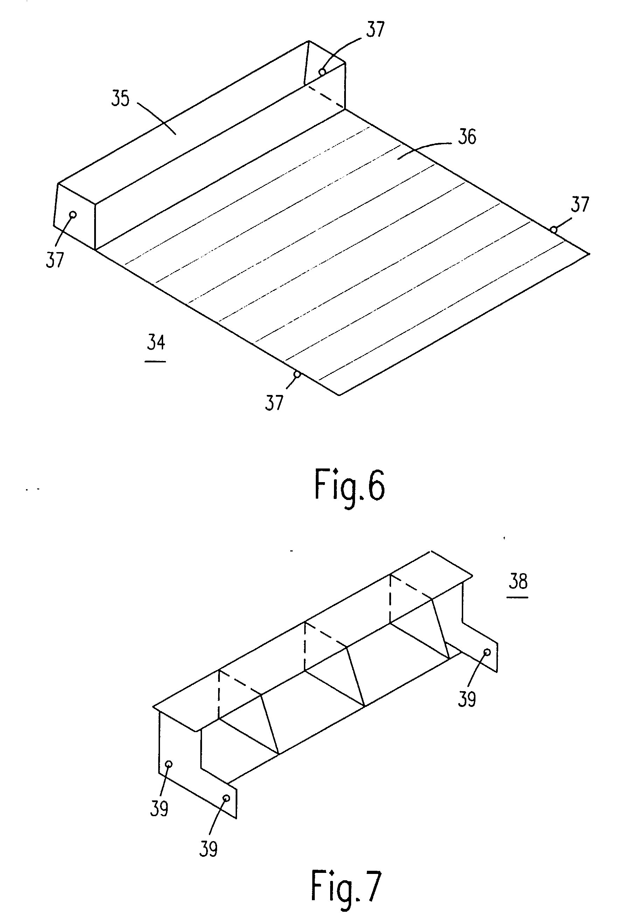

Das Ausführungsbeispiel gemäß Fig. 5 unterscheidet sich von dem nach Fig. 2 dadurch, daß der größere Raum 18 nunmehr keinerlei Halteanordnungen enthält, sondern lediglich ein in das obere Deckelteil 11 eingesetztes Einsatzteil 34. Somit entsteht ein Freiraum 35, der ein noch dickeres Textheft aufnehmen kann.

Alle Ausführungsbeispiele gemäß Fig. 2 bis 5 haben gleiche Außenabmessungen wie das bekannte Beispiel gemäß Fig. 1 und gleichartig ausgebildete Deckelteile.

Das in Fig. 5 nur teilweise und im Schnitt dargestellte Einsatzteil 34 ist in Fig. 6 perspektivisch dargestellt und besitzt eine Griffleiste 35 und eine beidseitig ebene Platte 36, die über seitliche Klemmelemente 37 in dem Deckelteil 11 verklemmt werden kann. Dieses Einsatzteil 34 ist in seinen Außenabmessungen einem üblichen Tray nachgebildet, besitzt jedoch keine Halteanordnung. Es dient in erster Linie dazu, ein zwischen der ebenen Platte 36 und dem Deckelteil 11 eingeführtes Informationsblatt zu halten.

Anstelle des Einsatzteiles 34 gemäß Fig. 6 kann auch Adapterteil 38 gemäß Fig. 7 verwendet werden, das ebenfalls über Klemmelemente 39 in das Deckelteil 11 eingeklemmt werden kann, allerdings nur den sonst von der Grifflasche ausgefüllten Raum einnimmt.

In den Gehäusen gemäß Fig. 2 bis 5 aufgenommene CD's sind mit 40 bezeichnet.

## Patentansprüche

1. Gehäuse zur Aufnahme von plattenförmigen Informationsträgern (40), z.B. CD's, mit einem eine beidseitig eben ausgebildet Tragplatte (15) aufweisenden Zwischenteil (14) und mit zwei an dem Zwischenteil (14) angelenkten, gleichartigen Deckelteilen (10, 11), wobei die Deckelteile (10, 11) innenseitig und das Zwischenteil (14) beidseitig jeweils eine Halteanordnung (21, 22, 25, 26) für die Informationsträger (40) aufweisen können, dadurch gekennzeichnet, daß die Tragplatte (15) zur Bildung von zwei unterschiedlich großen Räumen (17, 18) asymmetrisch zwischen den Deckelteilen (10, 11) angeordnet ist.

2. Gehäuse nach Anspruch 1, gekennzeichnet durch eine solche Lage der Tragplate (15), daß bei Bestückung des kleineren Raumes (17) mit beiden Halteanordnungen (21, 25) die Enden der Halteanordnungen (21, 25) mit geringem Abstand unmittelbar einander gegenüberstehen.

3. Gehäuse nach Anspruch 1 oder 2, dadurch gekennzeichnet, daß beide Deckelteile (10, 11) ein mit einer Halteanordnung (25, 26) versehenes Tray (23, 24) enthalten und daß beide Seiten der Tragplatte (15) ein Halteanordnung (21, 22) aufweisen (Fig. 2).

4. Gehäuse nach Anspruch 1 oder 2, dadurch gekennzeichnet, daß beide Deckelteile (10, 11) ein mit einer Halteanordnung (25, 26) versehenes Tray (23, 24) enthalten und daß die Tragplatte (15) nur auf der Seite in dem kleineren Raum (17) mit einer Halteanordnung (21) versehen ist (Fig. 3).

5. Gehäuse nach Anspruch 1 oder 2, dadurch gekennzeichnet, daß nur die beiden Deckelteile (10, 11) ein mit einer Halteanordnung (25, 26) versehenes Tray (23, 24) enthalten (Fig. 4).

6. Gehäuse nach Anspruch 1 oder 2, dadurch gekennzeichnet, daß nur das Deckelteil (10) des kleineren Raumes (17) ein eine Halteanordnung (25) aufweisendes Tray (23) enthält und daß nur die diesem Deckelteil (10) gegenüberliegende Seite der Tragplatte (15) eine Halteanordnung (21) aufweist (Fig. 5).

7. Gehäuse nach Anspruch 6, dadurch gekennzeichnet, daß das den größeren Raum (18) begrenzende Deckelteil (11) ein mit einer Grifflasche (35) versehenes Einsatzteil (34) enthält, das den Abmessungen eines Trays (24) einschließlich seiner Grifflasche (24a) angepaßt ist und im Deckelbereich eine beidseitig ebene, dünne Platte (36) aufweist.

8. Gehäuse nach Anspruch 6, dadurch gekennzeichnet, daß in das den größeren Raum (18) begrenzende Deckelteil (11) ein der Grifflasche (24a) des Trays (24) angepaßtes Adapterteil (38) eingeklemmt ist.

## Claims

1. A housing for accommodating disc-shaped information carriers (40), for example CDs, with a central part (14) comprising a support plate (15) which is flat on both sides and two identical lid parts (10,11) hinged to the central part (14), which lid parts (10,11) are capable of having one retaining device (21, 22, 25,26) each for the information carriers (40) on the inside, while the central part (14) is capable of having one such device (21,22) on both sides,
characterized in that the support plate (15) is arranged in an asymmetrical position between the lid parts (10,11) so as to form two spaces (17,18) of different size.

2. A housing as claimed in Claim 1, characterized by a position of the support plate (15) such that, the smaller space (17) being provided with two retaining devices (21,25), the ends of said retaining devices (21,25) face one another immediately at a short distance.

3. A housing as claimed in Claim 1 or 2, characterized in that both lid parts (10,11) comprise a tray (23,24) provided with a respective retaining device (25,26), and both sides of the support plate (15) comprise a retaining device (21,22) (Fig. 2).

4. A housing as claimed in Claim 1 or 2, characterized in that both lid parts (10,11) comprise a tray (23,24) provided with a respective retaining device (25,26), and the support plate (15) is provided with a retaining device (21) only at the side of the smaller space (17) (Fig. 3).

5. A housing as claimed in Claim 1 or 2, characterized in that only the two lid parts (10,11) each have a tray (23,24) provided with a retaining device (25,26) (Fig. 4).

6. A housing as claimed in Claim 1 or 2, characterized in that only the lid part (10) of the smaller space (17) contains a tray (23) provided with a retaining device (25), and only the side of the support plate (15) facing this lid part (10) comprises a retaining device (21) (Fig. 5).

7. A housing as claimed in Claim 6, characterized in that the lid part (11) bounding the larger space (18) contains an insert (34) provided with a side grip (35) which is adapted to the dimensions of a tray (24) including the side grip (24a) thereof and which comprises a thin plate (36) which is flat on both sides in the lid region.

8. A housing as claimed in Claim 6, characterized in that an adapter part (38) adapted to the side grip (24a) of the tray (24) is clamped into the lid part (11) bounding the larger space (18).

## Revendications

1. Boîtier pour le logement de supports d'information (40) en forme de disques, par exemple des CD, avec une pièce intermédiaire (14) présentant une plaque de support (15) de conception plane sur ses faces et avec deux pièces de couvercle (10, 11) similaires articulées à une pièce intermédiaire (14), les pièces de couvercle (10, 11) pouvant présenter sur leur face interne et la pièce intermédiaire (14) sur ses deux faces et un dispositif de retenue (21, 22, 25, 26) pour les supports d'information (40),
caractérisé en ce que la plaque de support (15) est disposée asymétriquement entre les pièces de couvercle (10, 11) en vue de former deux compartiments de taille différente (17, 18).

2. Boîtier selon la revendication 1, caractérisé par une position de la plaque de support (15) telle qu'en cas de compartiment inférieur (17) muni de deux dispositifs de retenue (21, 25), les extrémités des dispositifs de retenue (21, 25) se font face directement à un intervalle minime.

3. Boîtier selon l'une des revendications 1 ou 2, caractérisé en ce que les deux pièces de couvercle (10, 11) contiennent un plateau (23, 24) muni d'un dispositif de retenue (25, 26) et que les deux faces de la plaque de support (15) présentent un dispositif de retenue (21, 22) (Fig.2).

4. Boîtier selon l'une des revendications 1 ou 2, caractérisé en ce que les deux pièces de couvercle (10, 11) contiennent un plateau (23, 24) muni d'un dispositif de retenue (25, 26) et que la plaque de support (15) n'est dotée d'un dispositif de retenue (21) que sur la face située dans le compartiment inférieur (17) (Fig. 3).

5. Boîtier selon l'une des revendications 1 ou 2, caractérisé en ce que seules les deux pièces de couvercle (10, 11) contiennent un plateau (23, 24) muni d'un dispositif de retenue (25, 26) (Fig . 4).

6. Boîtier selon l'une des revendications 1 ou 2, caractérisé en ce que seule la pièce de couvercle (10) du compartiment plus petit (17) contient un plateau (23) présentant un dispositif de retenue (25) et que seule la face de la plaque de support (15) opposée à cette pièce de couvercle (10) présente un dispositif de retenue (21) (Fig. 5).

7. Boîtier selon la revendication 6, caractérisé en ce que la pièce de couvercle (11) délimitant le plus grand compartiment (18) contient une pièce intercalaire (34) munie d'une languette de prise (35), adaptée aux dimensions d'un plateau (24), y compris sa languette de prise (24a) et présentant dans la région du couvercle une plaque (36) fine et plane sur ses deux faces.

8. Boîtier selon la revendication 6, caractérisé en ce que, dans la pièce de couvercle (11) délimitant le plus grand compartiment (18) est bloqué un adaptateur (38) adapté à la languette de prise (24a) du plateau (24).
